# EUROPÄISCHE PATENTSCHRIFT

(11) **EP 0 433 923 B1**
(45) Veröffentlichungstag und Bekanntmachung des Hinweises auf die Patenterteilung: **15.09.1993**
(21) Anmeldenummer: 90124281.8
(22) Anmeldetag: 14.12.1990
(51) Int. Cl.: F02M 35/16, F02M 35/10, B60K 13/02

(54) **Luftansaugvorrichtung für eine Brennkraftmaschine**
Air intake device for an internal combustion engine
Dispositif d'admission d'air pour un moteur à combustion interne

(30) Priorität: 22.12.1989 DE 3942595
(43) Veröffentlichungstag der Anmeldung: 26.06.1991
(73) Patentinhaber: Iveco Magirus Aktiengesellschaft, D-89017 Ulm (DE)
(72) Erfinder: Six, Werner, Dipl.-Ing. (FH), W-7916 Nersingen (DE); Schneider, Georg, W-7913 Senden (DE)
(74) Vertreter: TER MEER STEINMEISTER & PARTNER GbR

(56) Entgegenhaltungen:
- EP-A- 0 365 892
- DE-A- 1 576 592
- DE-C- 757 592
- FR-A- 1 123 855
- FR-A- 1 355 652
- FR-A- 1 533 136
- FR-A- 2 402 774
- GB-A- 722 995
- GB-A- 771 619
- GB-A- 2 055 719
- GB-A- 2 164 302
- US-A- 4 366 878
- PATENT ABSTRACTS OF JAPAN vol. 10, no. 25 (M-450)(2082) 31 Januar 1986, & JP-A-60 183230 (HINO JIDOSHA KOGYO K.K.) 18 September 1985,

## Beschreibung

Die Erfindung betrifft eine Luftansaugvorrichtung für eine Brennkraftmaschine eines Kraftfahrzeuges, welche Luftonsaugvorrichtung eine Geräuschdämfungseinrichtung und einen Ansaugschnorchel in Form eines Reflexionsdämpfers mit einer einzigen Ansaugöffnung aufweist.

Bekannte Luftansaugvorrichtungen besitzen im Betrieb trotz vorhandener Geräuschdämpfungseinrichtung relativ hohe Ansauggeräusche insbesondere aufgrund erhöhter Luftansauggeschwindigkeit und ungünstiger Anordnung der Ansaugstelle teilweise über dem Fahrerhaus. Die erhöhten Geräusche übertragen sich leicht ins Innere des Fahrerhauses. Teilweise wird Motorwarmluft angesaugt. Es ergibt sich kein gleichmäßiges Luftprofil im Ansaugschnorchel. Schließlich verursachen die hohen Luftgeschwindigkeiten eine erhöhte Wasser-und Staubansaugung, die nicht nur den Geräuschpegel zusätzlich erhöht, sondern auch die gesamte Luftansaugvorrichtung in der Funktion beeinträchtigt und Zusatzaggregate zur Behebung der Beeinträchtigungen erforderlich nacht, insbesondere zusätzliche Wasserabscheidungsmaßnahmen, Zyklone, oder dergleichen. Die bekannten Luftansaugvorrichtungen können nur schwer auf einen bestimmten Brennkraftmaschinentyp zwecks Minimierung der erzeugten Ansauggeräusche eingestellt werden, insbesondere aufgrund des ungleichmäßigen, stellenweise unkontrollierten Luftprofils im Ansaugschnorchel (vgl. GB 2 055 719 A, DE-OS 28 54 866).

Aus JP-A-60 183230 ist eine Luftansaugvorrichtung der eingangs genannten Art bekannt, bei der beim Übergang der Gasströmung von einem Rohr in die Vorrichtung sich Druck und Geschwindigkeit dieser Gasströmung ändern. Infolge des daduch entstandenen Druckverlustes werden Druckwellen reflektiert, was zu einer Dämpfung dieser Wellen und somit zur Geräuschdämpfung führt. Auch diese bekannte Vorrichtung kann auf einen bestimmten Brennkraftmaschinentyp zwecks Minimierung der erzeugten Ansauggeräusche nicht abgestimmt werden.

Aufgabe der Erfindung ist die Schaffung einer Luftansaugvorrichtung der eingangs genannten Art, die einfach und kompakt aufgebaut, an geeigneter Stelle an einem Fahrzeug angeordnet, wirkungsvoll im Betrieb ist, und gleichwohl auf einen bestimmten Brennkraftmaschinentyp zwecks Minimierung der erzeugten Ansauggeräusche eingestellt werden kann.

Gelöst wird die der Erfindung zugrundeliegende Aufgabe durch die Merkmale, von Anspruch 1.

Vorteilhaft weitergebildet wird der Erfindungsgegenstand durch die Merkmale der Unteransprüche 2 bis 14.

Wesen der Erfindung ist die Unterteilung des Ansaugschnorchels in einzelne in Durchströmungsrichtung parallel und verjüngt ausgebildete Luftführungsabschnitte unterschiedlicher Länge.

Dadurch wird mit verblüffend einfachen Mitteln ein kompakter Ansaugschnorchel geschaffen, der selbst die Geräuschdämpfungseinrichtung darstellt und höchst wirkungsvoll bei einem bestimmten Brennkraftmaschinentyp betrieben werden kann. Die unterschiedlich langen Luftführungsabschnitte können aufeinander abgestimmt werden, die bei bestimmten Frequenzen zu Pegelminderungen führen. Es kann also eine optimale Abstimmung für verschiedene Motorausführungen (Motorleistungen) durchgeführt werden, wobei ein einziger Bausatz unterschiedliche Individualkonfigurationen (Querschnitte, Lufteintrittsöffnungen oder dergl.) ermöglicht.

Die Luftansaugvorrichtung befindet sich vorteilhaft direkt hinter dem Fahrerhaus eines Nutzfahrzeuges entweder auf einer oder auf beiden Fahrzeugaußenseiten, wobei die Ansaugstelle bzw. die Ansaugöffnung an der Fahrzeugaußenseite liegt. Aufgrund der groß dimensionierten Ansaugöffnung ergeben sich im Betrieb geringe Luftansauggeschwindigkeiten, die von Haus aus geringe Ansauggeräusche verursachen und insbesondere auch nur vergleichsweise wenig Wasser- oder Staubpartikel ins Innere des Luftschnorchels mitreißen. Dadurch sind zusätzliche Wasserabscheidungsmaßnahmen wie beispielsweise der Einbau von Zyklonen oder dergleichen entbehrlich.

Die Ansaugöffnung ist vorteilhaft mit einer lamellenartigen Schutzabdeckung versehen, welche luftdurchlässig ist und gleichwohl aufgrund bestimmter Anordnung und Ausbildung der Lamellen einen Wassereintritt erschwert bzw. praktisch verhindert. An den Lamellen anhängende Wassertropfen werden durch Abrißkrümmungen und Abrißkanten gegebenenfalls unter Mitwirkung des Fahrtwindes schon auf der Eingangsseite der Luftansaugvorrichtung abgetrennt. Losgelöste Tropfen werden aufgrund der geringen Eintrittsgeschwindigkeit der Luft nicht ins Innere mitgerissen.

Die Gesamtanordnung ist so getroffen, daß Dachaufbauten und Aufbauvorbauten an Fahrzeugen ohne weiteres möglich sind. Aufgrund der Schnorchel- und Geräuschdämpferausbildung als eine Einheit ergibt sich ein einfacher Aufbau mit wenigen Teilen, welcher mit einer Gewichtsersparnis gegenüber den bekannten Luftansaugvorrichtungen einhergeht. Durch die vorgesehene Lage der Ansaugöffnung wird die Fahrerhausoberfläche schwingungsmäßig nicht angeregt.

Die Erfindung wird nachfolgend anhand von Ausführungsbeispielen unter Bezugnahme der beigefügten Zeichnung näher beschrieben; es zeigen:
- Fig. 1: in schematischer Rückansicht ein Nutzfahrzeug mit einer Luftansaugvorrichtung hinter dem Fahrerhaus,
- Fig. 2: eine Rückansicht ähnlich Fig. 1 mit spiegelbildlich angeordneten Luftansaugvorrichtungen auf beiden Fahrzeugseiten,
- Fig. 3: den Ansaugschnorchel der Fig. 1 in einem schematischen Vertikalschnitt,
- Fig. 4: den Ansaugschnorchel gemäß Fig. 1 gesehen von der Fahrzeugquerseite,
- Fig. 5: einen Ansaugschnorchel in anderer Ausgestaltung in einem Vertikalschnitt ähnlich Fig. 3,
- Fig. 6: einen schematischen Teilschnitt durch die vordere Schutzabdeckung im Bereich der Ansaugöffnung,
- Fig. 7: eine schematische Teilseitenansicht der lamellenartigen Schutzabdeckung ähnlich der Seitenansicht gemäß Fig. 4,
- Fig. 8 bis 12: Ausführungsvarianten der Lamellen von Schutzabdeckungen.

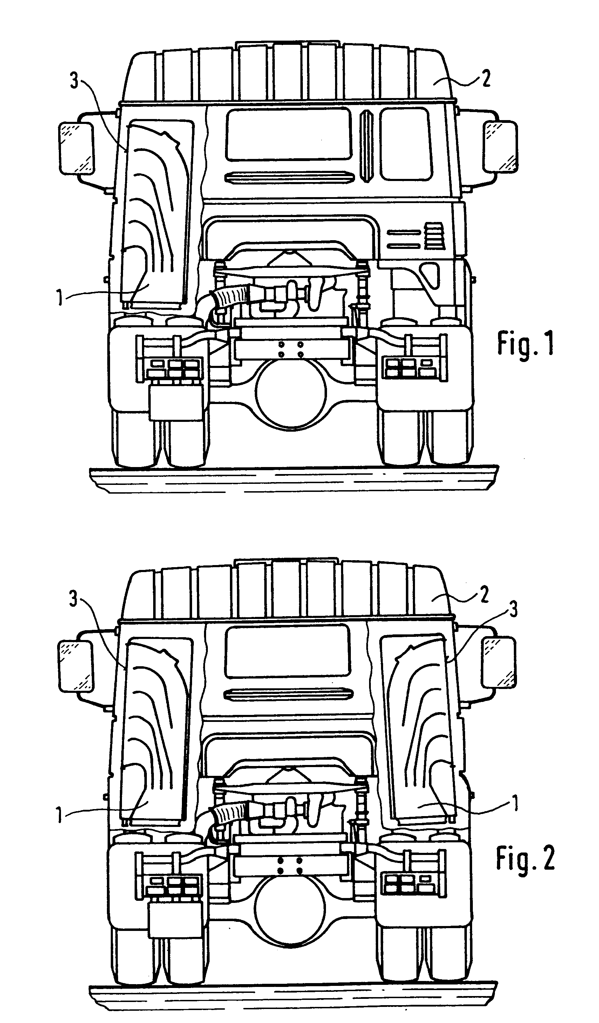

Gemäß Zeichnung ist eine Luftansaugvorrichtung mit Geräuschdämpfungseinrichtung zum Ansaugen von Verbrennungsluft für eine Brennkraftmaschine eines Nutzfahrzeugs vorgesehen, und hierbei befindet sich der Ansaugschnorchel (1) der Luftansaugvorrichtung in vertikaler Anordnung hinter dem Fahrerhaus (2) des Nutzfahrzeuges entweder auf einer Fahrzeugaußenseite gemäß Fig. 1 oder spiegelbildlich auf beiden Fahrzeugaußenseiten gemäß Fig. 2, wenn eine Doppelfilteranlage vorgesehen ist.

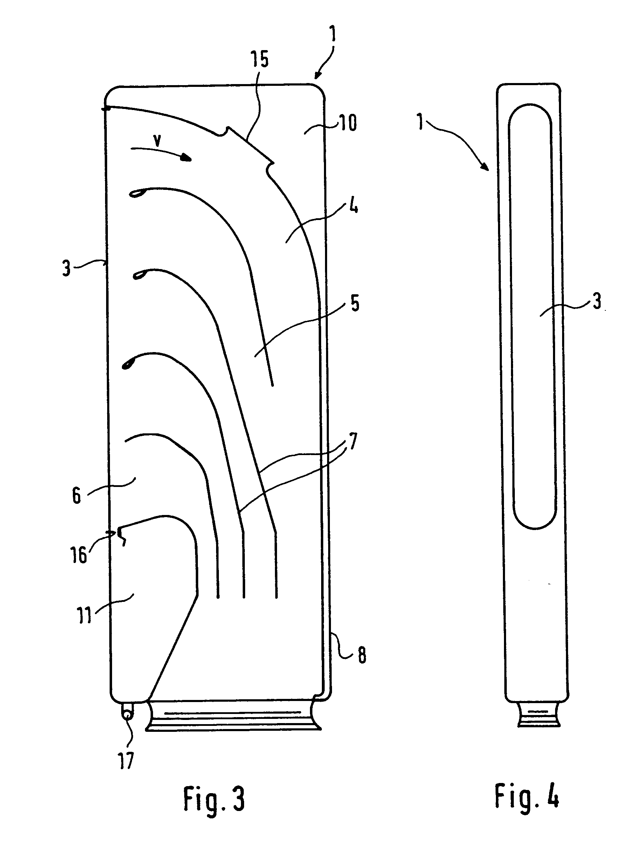

Der Ansaugschnorchel (1) weist eine einzige große fahrzeugaußenseite Ansaugöffnung (3) auf, welche sich praktisch über die gesamte Höhe des schmalen Hochkasten-Gehäuses (8) der Ansaugvorrichtung erstreckt, wie dies insbesondere der Fig. 3 und 4 zu entnehmen ist.

Der Ansaugschnorchel (1) ist seinerseits selbst als sogenannter Reflexionsdämpfer ausgebildet, der auch als Interferenzdämpfer bezeichnet wird.

Das Innere des Ansaugschnorchels (1) ist in einzelne in Durchströmungsrichtung (v) parallel verlaufende Luftführungsabschnitte (4, 5, 6) unterteilt, die durch auswechselbare Luftleitbleche (7) festgelegt sind, welche insbesondere die gleiche oder unterschiedliche Länge besitzen. Es ergeben sich im Betrieb hierdurch verschieden lange, definiert geführte Luftströmungswege, die mithin aufeinander auf die kritischen Frequenzen im Betrieb abgestimmt werden können, um den Geräuschpegel zu minimieren bei einer bestimmten Motorausführung.

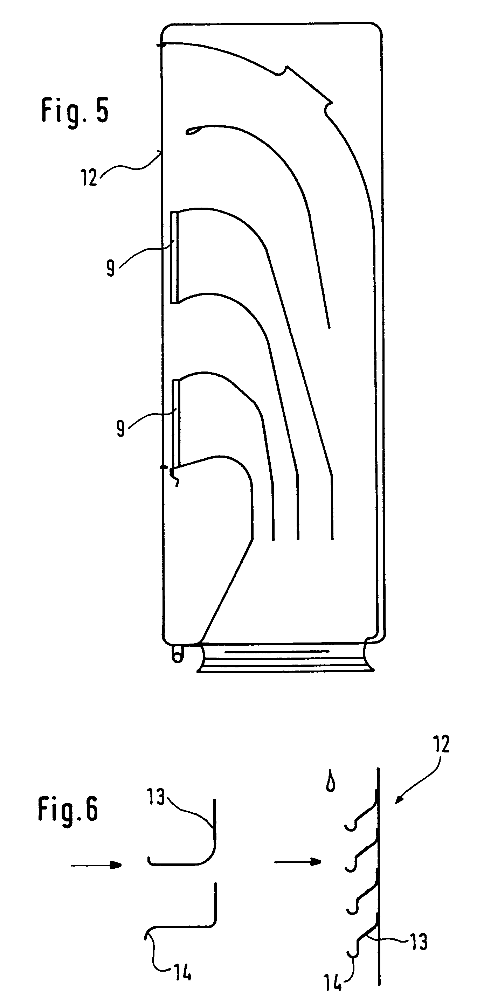

Ferner können die Eingangsseiten einzelner Luftführungsabschnitte mit einer Abdeckung (9) gemäß Fig. 5 versehen sein, um beispielsweise eine weitere Frequenzabstimmung λ/2 oder λ/4 vornehmen zu können. Im Bereich über dem obersten Luftführungsabschnitt (4) befindet sich gemäß Ausführungsform der Fig. 3 ein zusätzliches Dämpfungsvolumen (10), welches ausschließlich über eine Durchtrittsöffnung (15) mit dem obersten Luftführungsabschnitt (4) in Verbindung steht.

Im Bereich unter dem untersten Luftführungsabschnitt (6) befindet sich in seitlicher Anordnung in etwa unter der Ansaugöffnung (3) ein seitlicher Wasserbehälter (11) mit einer Eintrittsöffnung (16) und einer Austrittsöffnung (17) für etwa im Betrieb vorhandenes Kondensat, welches an der Eingangsseite der Luftführungsabschnitte (4, 5, 6) entsteht.

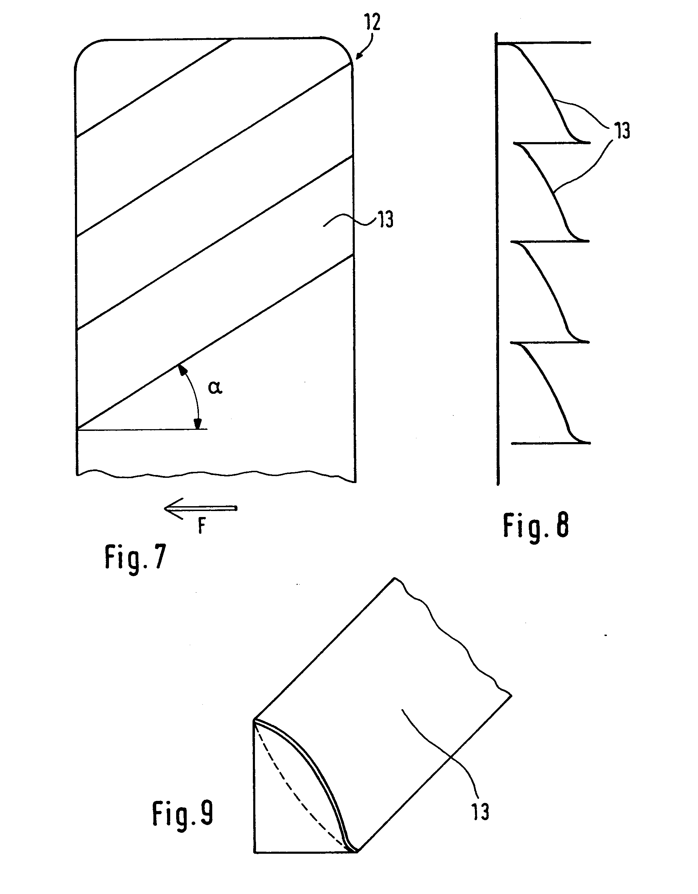

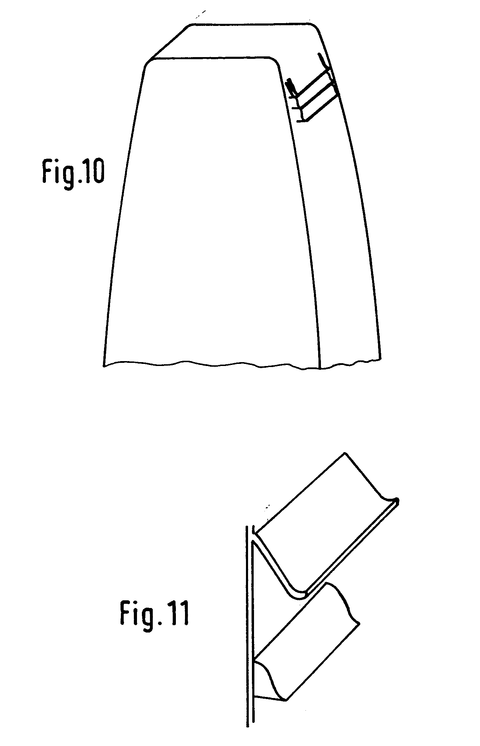

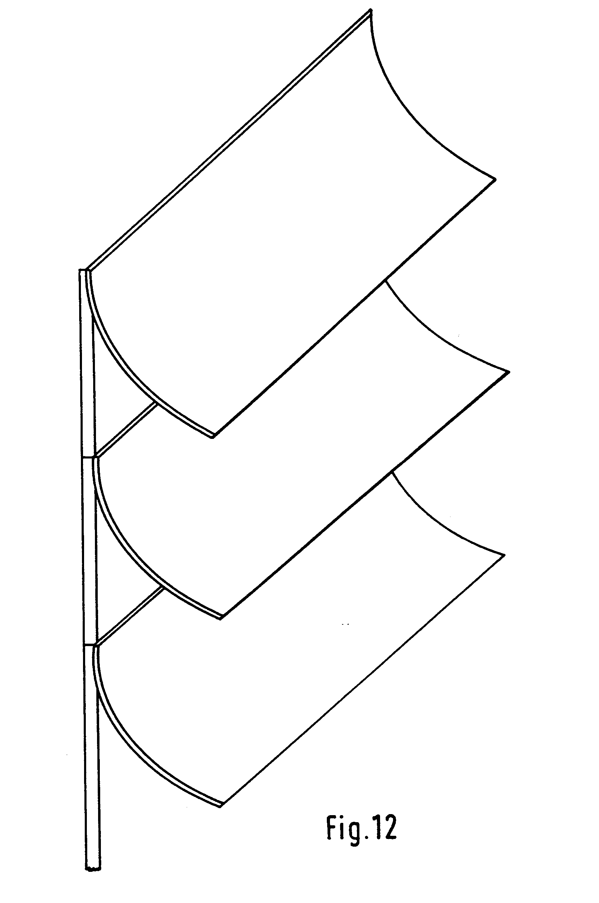

Die seitliche schmale und vergleichsweise hohe Ansaugöffnung (3) ist durch eine luftdurchlässige, im wesentlichen wasserabweisende lamellenartige Schutzabdeckung (12) versehen, wie dies beispielsweise in Fig. 7 gezeigt ist. Einzelne Lamellen (13) der Schutzabdeckung können unterschiedlich beispielsweise gemäß den Fig. 6, 8 bis 12 gestaltet sein. Eine bevorzugte Ausführungsvariante sieht eine Schutzabdeckung (12) vor, deren einzelne Lamellen (13) im wesentlichen gleich und parallel zueinander ausgebildet und zur Fahrzeugaußenseite hin schräg nach unten gerichtet sind. Im Bereich der unteren Kanten der Lamellen (13) können Wasser-Abrißkrümmungen (14) gemäß Fig. 6 vorgesehen sein. Die Gesamtanordnung der Lamellen ist insbesondere so getroffen, daß die unteren Kanten der Lamellen (13) von der Frontseite zur Heckseite des Fahrzeugs schräg nach oben verlaufen, insbesondere ein Schrägwinkel α von maximal 32° vorgesehen ist (vgl. Fig. 7). Bei einer Fahrt des Nutzfahrzeugs in Fahrtrichtung (F) werden durch den Fahrtwind die an den unteren Kanten anhaften- den Tropfen auf der Schräge nach oben mitgerissen, was mit einem beschleunigten Abreißen der Tropfen einhergeht. Herunterfallende Tropfen werden nicht in das Innere des Ansaugschnorchels (1) mitgerissen aufgrund der geringen Lufteintrittsgeschwindigkeit durch Ausbildung des großen Querschnitts der Ansaugöffnung (3). Da die Lufteintrittsgeschwindigkeit gering ist, ergeben sich von Haus aus sehr niedrige Ansauggeräusche,und es werden wenige Staubpartikel mitgerissen. Innere zusätzliche Wasserabscheidungskonstruktionen wie Zyklone oder dergleichen sind entbehrlich.

## Patentansprüche

1. Luftansaugvorrichtung für eine Brennkraftmaschine eines Kraftfahrzeuges, welche Luftansaugvorrichtung eine Geräuschdämpfungseinrichtung und einen Ansaugschnorchel in Form eines Reflexionsdämpfers mit einer einzigen Ansaugöffnung aufweist,
dadurch gekennzeichnet,
daß der Ansaugschnorchel (1) in einzelne in Durchströmungsrichtung (v) parallel und verjüngt ausgebildete Luftführungsabschnitte (4,5,6) unterschiedlicher Länge unterteilt ist.

2. Luftansaugvorrichtung nach Anspruch 1,
dadurch **gekennzeichnet,**
daß die einzelnen Luftführungsabschnitte (4, 5, 6) gekrümmt ausgebildet sind.

3. Luftansaugvorrichtung nach Anspruch 1 oder 2,
dadurch **gekennzeichnet,**
daß der Ansaugschnorchel (1) ein flaches Hochkasten-Gehäuse (8) aufweist und innere auswechselbare Luftleitbleche (7) mit einer gleichen und/oder unterschiedlichen Länge besitzt.

4. Luftansaugvorrichtung nach einem oder mehreren der Ansprüche 1 bis 3,
dadurch **gekennzeichnet,**
daß einzelne Luftführungsabschnitte eingangsseitig mit einer Abdeckung (9) versehen sind (Fig. 5).

5. Luftansaugvorrichtung nach Anspruch 4,
dadurch **gekennzeichnet,**
daß die Abdeckungen (9) abnehmbar ausgebildet sind.

6. Luftansaugvorrichtung nach einem oder mehreren der Ansprüche 1 bis 5,
dadurch **gekennzeichnet,**
daß der Ansaugschnorchel (1) direkt hinter dem Fahrerhaus (2) eines Nutzfahrzeuges auf einer oder bei einer Doppelfilteranlage spiegelbildlich auf beiden Fahrzeugseiten angeordnet ist/sind.

7. Luftansaugvorrichtung nach einem oder mehreren der Ansprüche 1 bis 6,
dadurch **gekennzeichnet,**
daß über dem Bereich des obersten Luftführungsabschnitts (4) ein zusätzliches Dämpfungsvolumen (10) ausgebildet ist.

8. Luftansaugvorrichtung nach einem oder mehreren der Ansprüche 1 bis 7,
dadurch **gekennzeichnet,**
daß unter dem untersten Luftführungsabschnitt (6) im Bereich unter der Ansaugöffnung (3) ein seitlicher Wasserbehälter (11) ausgebildet ist.

9. Luftansaugvorrichtung nach einem oder mehreren der Ansprüche 1 bis 8,
dadurch **gekennzeichnet,**
daß die Ansaugöffnung (2) mit einer luftdurchlässigen wasserabweisenden lamellenartigen Schutzabdeckung (12) versehen ist.

10. Luftansaugvorrichtung nach Anspruch 9,
dadurch **gekennzeichnet,**
daß die einzelnen parallelen gleich ausgebildeten Lamellen (13) der Schutzabdeckung (12) schräg nach unten zur Fahrzeugaußenseite hin gerichtet sind (Fig. 6 bis 12).

11. Luftansaugvorrichtung nach Anspruch 10,
dadurch **gekennzeichnet,**
daß die unteren Kanten der Lamellen (13) eine Wasser-Abrißkrümmung (14) besitzen (Fig. 6).

12. Luftansaugvorrichtung nach Anspruch 10 oder 11,
dadurch **gekennzeichnet,**
daß die unteren Kanten der Lamellen (13) von der Frontseite zur Heckseite des Fahrzeugs schräg nach oben verlaufen (Fig. 7).

13. Luftansaugvorrichtung nach Anspruch 12,
dadurch **gekennzeichnet,**
daß die Schräge der unteren Kanten einen Winkel α von maximal 32° zur Horizontalen einschließt.

14. Luftansaugvorrichtung nach einem oder meheren der Anspruch 3 bis 13,
dadurch **gekennzeichnet,**
daß die schmale Ansaugöffnung (3) praktisch über die gesamte Höhe des Hochkasten-Gehäuses (8) verläuft.

## Claims

1. Air-intake apparatus for an internal-combustion engine of a motor vehicle, which air-intake apparatus has a noise-damping device and an intake snorkel in the form of a reflection damper with a single intake orifice, characterised in that the intake snorkel (1) is subdivided into individual air-guide portions (4, 5, 6) of differing length which are made parallel and narrowed in the throughflow direction (v).

2. Air-intake apparatus according to Claim 1, characterised in that the individual air-guide portions (4, 5, 6) are made curved.

3. Air-intake apparatus according to Claim 1 or 2, characterised in that the intake snorkel (1) has a flat tall-box housing (8) and possesses internal exchangeable air-guide plates (7) of equal and/or differing length.

4. Air-intake apparatus according to one or more of Claims 1 to 3, characterised in that individual air-guide portions are provided on the entry side with a cover (9) (Figure 5).

5. Air-intake apparatus according to Claim 4, characterised in that the covers (9) are made removable.

6. Air-intake apparatus according to one or more of Claims 1 to 5, characterised in that the intake snorkel (1) is/are [sic] arranged directly behind the driver's cab (2) of a commercial vehicle either on one side of the vehicle or, in a double-filter system, mirror-symmetrically on both sides of the vehicle.

7. Air-intake apparatus according to one or more of Claims 1 to 6, characterised in that an additional damping volume (10) is formed above the region of the topmost air-guide portion (4).

8. Air-intake apparatus according to one or more of Claims 1 to 7, characterised in that a lateral water container (11) is formed under the bottommost air-guide portion (6) in the region underneath the intake orifice (3).

9. Air-intake apparatus according to one or more of Claims 1 to 8, characterised in that the intake orifice (2) is provided with an air-permeable water-repelling slat-like protective cover (12).

10. Air-intake apparatus according to Claim 9, characterised in that the individual parallel identically designed slats (13) of the protective cover (12) are directed obliquely downwards towards the outside of the vehicle (Figures 6 to 12).

11. Air-intake apparatus according to Claim 6, characterised in that the lower edges of the slats (13) have a water breakaway bend (14) (Figure 6).

12. Air-intake apparatus according to Claim 10 or 11, characterised in that the lower edges of the slats (13) extend obliquely upwards from the front side of the vehicle to the rear side (Figure 7).

13. Air-intake apparatus according to Claim 12, characterised in that the slope of the lower edges forms an angle α of at most 32° with the horizontal.

14. Air-intake apparatus according to one or more of Claims 3 to 13, characterised in that the narrow intake orifice (3) extends virtually over the entire height of the tall-box housing (8).

## Revendications

1. Dispositif d'aspiration d'air d'un moteur à combustion interne d'un véhicule, ledit dispositif d'aspiration d'air comprenant un dispositif d'insonorisation et un schnorchel d'aspiration ayant la forme d'un amortisseur à réflexions comprenant un unique orifice d'aspiration, caractérisé en ce que le schnorchel d'aspiration (1) est subdivisé en sections individuelles de guidage d'air (4, 5, 6) qui se rétrécissent et sont parallèles dans le sens de la circulation (v) et qui ont des longueurs différentes.

2. Dispositif d'aspiration d'air selon la revendication 1, caractérisé en ce que les sections individuelles de guidage d'air (4, 5, 6) sont courbes.

3. Dispositif d'aspiration d'air selon la revendication 1 ou 2, caractérisé en ce que le schnorchel d'aspiration (1) comprend une enveloppe (8) formée d'un caisson haut et plat et il comporte des déflecteurs intérieurs et échangeables d'air (7) ayant la même longueur et/ou des longueurs différentes.

4. Dispositif d'aspiration d'air selon l'une ou plusieurs des revendications 1 à 3, caractérisé en ce que les sections individuelles de guidage d'air sont munies à l'entrée d'un élément de couverture (9) (figure 5).

5. Dispositif d'aspiration d'air selon la revendication 4, caractérisé en ce que les éléments de couverture (9) sont amovibles.

6. Dispositif d'aspiration d'air selon l'une ou plusieurs des revendications 1 à 5, caractérisé en ce que le schnorchel d'aspiration (1) est disposé directement derrière l'habitacle (2) d'un véhicule utilitaire sur un côté et/ou sur les deux côtés du véhicule de manière symétriquement inverse dans le cas d'une installation double de filtrage.

7. Dispositif d'aspiration d'air selon l'une ou plusieurs des revendications 1 à 6, caractérisé en ce qu'un volume supplémentaire d'amortissement (10) est réalisé au-dessus de la zone de la section supérieure de guidage d'air (4).

8. Dispositif d'aspiration d'air selon l'une ou plusieurs des revendications 1 à 7, caractérisé en ce qu'un récipient latéral à eau (11) est réalisé sous la section inférieure de guidage d'air (6) dans la région située sous l'orifice d'aspiration (3).

9. Dispositif d'aspiration d'air selon l'une ou plusieurs des revendications 1 à 8, caractérisé en ce que l'orifice d'aspiration (2) est équipé d'un élément de couverture de protection (12) de type à lamelles qui laisse passer l'air et qui refoule l'eau.

10. Dispositif d'aspiration d'air selon la revendication 9, caractérisé en ce que les lamelles individuelles parallèles et identiques (13) de l'élément de couverture de protection (12) sont orientées obliquement vers le bas et vers le côté extérieur du véhicule (figures 6 à 12).

11. Dispositif d'aspiration d'air selon la revendication 10, caractérisé en ce que le bord inférieur des lamelles (13) comporte un coude (14) de détachement de l'eau (figure 6).

12. Dispositif d'aspiration d'air selon la revendication 10 ou 11, caractérisé en ce que le bord inférieur des lamelles (13) est orienté obliquement vers le haut du côté antérieur vers le côté arrière du véhicule (7).

13. Dispositif d'aspiration d'air selon la revendication 12, caractérisé en ce que l'obliquité du bord inférieur inscrit un angle a qui est au maximum de 32° sur l'horizontale.

14. Dispositif d'aspiration d'air selon l'une ou plusieurs des revendications 3 à 13, caractérisé en ce que l'orifice étroit d'aspiration (3) se prolonge pratiquement sur la totalité de la hauteur de l'enveloppe (8) formée d'un caisson haut.
